# EUROPEAN PATENT APPLICATION

(11) **EP 2 685 729 A2**
(43) Date of publication of application: **15.01.2014**
(21) Application number: 12755204.0
(22) Date of filing: 09.03.2012
(51) Int. Cl.: H04N 13/00, H04N 7/08

(54) **TRANSMISSION DEVICE AND METHOD FOR PROVIDING PROGRAM-LINKED STEREOSCOPIC BROADCASTING SERVICE, AND RECEPTION DEVICE AND METHOD FOR SAME**

(30) Priority: 10.03.2011 KR 20110021551; 09.03.2012 KR 20120024669
(71) Applicant: Electronics And Telecommunications Research Institute, Daejeon-si 305-700 (KR)
(72) Inventor: YIM, Hyun Jeong, Seoul 140-868 (KR); JUNG, Kwanghee, Namyangju-si Gyeonggi-do 472-887 (KR); KWON, Hyoung Jin, Cheongju-si Chungbuk 361-741 (KR); LEE, Gwang Soon, Daejeon-si 305-747 (KR); YUN, Kug Jin, Daejeon-si 305-759 (KR); CHEONG, Won Sik, Daejeon-si 305-761 (KR); HUR, Nam Ho, Daejeon-si 305-768 (KR)
(74) Representative: Betten & Resch
(86) International application number: PCT/KR2012/001762
(87) International publication number: WO 2012/121572

(57) **Abstract**

Disclosed herein are a transmission apparatus and method and a reception apparatus and method for a program associated stereoscopic broadcasting service. The transmission apparatus includes: a real time stream encoder generating a real time stream by encoding a reference image; a non-real time (NRT) stream encoder generating an NRT stream based on an additional image; an image synchronization information generator generating a service signaling and image synchronization information (including an event information table (EIT) and a program map table (PMT)) stream for synchronizing the reference image and the additional image with each other based on 3D content synchronization information; and a re-multiplexer generating a program associated stereoscopic broadcasting stream by multiplexing the real time stream, the non-real time stream, and the service signaling and image synchronizing information stream.

## Description

### [Technical Field]

The present invention relates to a transmission apparatus and method and a reception apparatus and method for providing a broadcasting service, and more particularly, to a transmission apparatus and method and a reception apparatus and method for providing a program associated stereoscopic broadcasting service.

### [Background Art]

In the advanced television systems committee (ATSC), the standardization of a non-real-time (NRT) technology capable of transmitting a content desired by a viewer using an extra bandwidth or an idle time and storing and using the content in a reception apparatus has been conducted. The NRT includes a technology of allowing a view to use a desired content in a desired time beyond an existing service scheme in which a content provider unilaterally transfers a content. The NRT service is transferred to a single virtual channel together with a real-time broadcasting channel, and a content transferred using a terrestrial network is encapsulated into IP based file delivery over unidirectional transport (FLUTE: See IETF RFC 3926) data using DSM-CC addressable section specifications and then transmitted to a receiver.

The ATSC NRT uses a specific IP address called a service signaling channel (SSC) and a port number (224.0.23.60: 4937) in order to signal a broadcasting content transferred through an FLUTE protocol and transfers special tables such as a service map table (SMT) and a non-real time-information table (NRT-IT) using the SSC channel. The SMT includes information such as FLUTE session information (a transport session identification, an IP address, a UDP port number, or the like) for obtaining an NRT service, a service ID for connection with the NRT-IT, a consumption model, a capability capable of determining whether or not a service may be represented in a receiver, and the like. Next, the NRT-IT is used in order to inform the receiver of various information on each downloadable content item and defines a download valid time, a size of a corresponding content, content linkage information (content_linkage) for linkage information between a corresponding content item and a file transmitted by the FLUTE, and the like.

However, current specifications are described based on the content for a case of independently using content transferred in non-real time and do not describe a specific method of using the content in connection with other broadcasting services including a real time stream. In addition, the current specifications include only a 2D content based non-real time service, and in the next standard, discussion on provision of a 3D service has been conducted.

As the related art for providing a 3D non-real time based broadcasting service, there is a method of first transmitting a reference image in real time and transmitting an additional image in non-real time before a broadcasting time ("System and Method for Digital Real Sense Transmitting/Receiving based on Non-Real time" disclosed in Korean Patent Laid-Open Publication No. 10-2008-0053175 laid-open published on June 12, 2008). However, the above-mentioned related art does not use an IP based ATSC NRT mechanism and does not also include a method of signaling a non-real time based 3D broadcasting service.

As another related art, there is a "Method for Processing Non-real time Stereoscopic Services in Terrestrial Digital Multimedia Broadcasting and Apparatus for Receiving Terrestrial Digital Multimedia Broadcasting" disclosed in Korean Patent Laid-Open Publication No. 10-2010-0086440 laid-open published on July 30, 2010. The above-mentioned technology has suggested a scenario for a non-real time stereoscopic service and a stereoscopic service descriptor (SS_descriptor) therefor and has suggested a method for synchronizing a real-time image and a stored content with each other. However, this technology, which is a method of providing a service by providing both of a reference image and an additional image in real time, does not include a service of a form in which the reference image is transferred in real time and the additional image is transferred in non-real time.

Therefore, a need exists for a transmission apparatus and method and a reception apparatus and method capable of providing a 3D broadcasting service by synchronizing a reference image transferred in real time and an additional image transferred in non-real time with each other based on an ATSC NRT technology.

### (Related Art Document)

### [Patent Document]

(Patent Document 1) Korean Patent Laid-Open Publication No. 10-2008-0053175 ("System and Method for Digital Real Sense Transmitting/Receiving based on Non-Real time", Electronics and Telecommunications Research Institute, laid-open published on June 12, 2008)

### [Disclosure]

### [Technical Problem]

The present invention provides a transmission apparatus and method and a reception apparatus and method for providing 3D broadcasting in non-real time while providing backward compatibility with existing broadcasting.

The present invention also provides a transmission apparatus and method and a reception apparatus and method for providing a 3D service by transferring an additional image based on a non-real time mechanism and storing the additional image in a receiver to synchronize the additional image with a reference image transferred in real time.

### [Technical Solution]

In an aspect, a transmission apparatus for a program associated stereoscopic broadcasting service is provided. The transmission apparatus includes: a real time stream encoder generating a real time stream by encoding a reference image; a non-real time (NRT) stream encoder generating an NRT stream based on an additional image; an image synchronization information generator generating a service signaling and image synchronization information (including an event information table (EIT) and a program map table (PMT)) stream for synchronizing the reference image and the additional image with each other based on 3D content synchronization information; and a re-multiplexer generating a program associated stereoscopic broadcasting stream by multiplexing the real time stream, the non-real time stream, and the service signaling and image synchronizing information stream.

The non-real time stream encoder may store and manage an NRT content based on the additional image and generate a schedule for transmission of the NRT content to transmit the NRT content to the re-multiplexer in non-real time according to the schedule.

The non-real time stream encoder may include: a non-real time content manager storing and managing the NRT content based on the additional image; an NRT content encoder generating the NRT stream by receiving an NRT image of the NRT content and performing encoding on the NRT image; and an NRT signaling information encoder generating NRT signaling information in order to transmit information related to the NRT content and configuration information of the program associated stereoscopic broadcasting service to a receiver.

The service signaling and image synchronization information may include program specific information (PSI)/program and service information protocol (PSIP) information, and the NRT signaling information may include a service map table (SMT) and a non-real time information table (NRT-IT).

At least any one of the service signaling and image synchronization information and the NRT signaling information may include an SNRT program descriptor (SNRT_Program_descriptor), wherein the SNRT program descriptor includes: a service flag (StereoMono_serviceFlag) indicating whether a service provided in the transmission apparatus is a monoscopic service or the program associated stereoscopic broadcasting service; service type information (NRT_Service_type) indicating a 3D broadcasting service type for signaling that the service provided in the transmission apparatus is the program associated stereoscopic broadcasting service; and a time stamp information (FirstAUTimeStamp) indicating a time stamp of a start time of the program associated stereoscopic broadcasting service.

At least any one of the service signaling and image synchronization information and the NRT signaling information may include an SNRT ES information descriptor (PA_SNRT_ES_Info_descriptor) including information on whether the reference image is a left image or a right image and link information on the additional image synchronized with the reference image, wherein the SNRT ES information descriptor includes: a field (view_flag) for signaling whether the reference image is the left image or the right image; and a file position information field (URI/FileName) for loading an NRT content file related to the additional image synchronized with the reference image.

At least any one of the SMT and the NRT-IT may include a capabilities descriptor (Capabilities_descriptor) downloading only the NRT content capable of being supported in the receiver to allow the program associated stereoscopic broadcasting service to be performed, wherein the capabilities descriptor includes: a capability category including a service compatible code and a frame compatible code that are capable of signaling the 3D content configuration information; and a wrapper/archive format category that is a code for signaling a 3D file format.

The NRT-IT may include a stereoscopic related information descriptor (Stereoscopic_Related_info_descriptor) performing support so as to determine that the NRT content transmitted to the receiver is a content for the program associated stereoscopic broadcasting service, wherein the stereoscopic related information descriptor includes: a transport session identification (TSID) of the reference image that is to configure the program associated stereoscopic broadcasting service; a program number of the reference image that is to configure the program associated stereoscopic broadcasting service; a program identification (PID) of the reference image that is to configure the program associated stereoscopic broadcasting service; and an expected start time of the program associated stereoscopic broadcasting service.

The PMT may include information on a receiver wake-up time point for loading a related additional image file in advance in the receiver in order to synchronize the reference image and the additional image with each other.

In another aspect, a transmission method for a program associated stereoscopic broadcasting service is provided. The transmission method includes: a real time stream encoding step of generating a real time stream by encoding a reference image; an NRT streaming encoding step of generating an NRT stream based on an additional image; an image synchronization information generating step of generating a service signaling and image synchronization information (including an EIT and a PMT) stream for synchronizing the reference image and the additional image with each other based on 3D content synchronization information; and a re-multiplexing step of generating a program associated stereoscopic broadcasting stream by multiplexing the real time stream, the non-real time stream, and the service signaling and image synchronizing information stream.

In still another aspect, a reception apparatus for a program associated stereoscopic broadcasting service is provided. The reception apparatus includes: a demultiplexer receiving a program associated stereoscopic broadcasting stream to demultiplex the program associated stereoscopic broadcasting stream into a real time stream, an NRT stream, and a service signaling and image synchronization information stream; a real time image decoder generating a reference image in real time based on the real time stream; an NRT image decoder generating an additional image in non-real time based on the NRT stream; a service signaling and image synchronization information parser generating an EIT and a PMT for synchronizing the reference image and the additional image with each other based on the service signaling and image synchronization information stream; and a renderer reproducing a 3D image based on the reference image and the additional image, wherein the non-real time image decoder generates the additional image in consideration of synchronization with the reference image based on the EIT and the PMT.

The NRT image decoder may include: an NRT decoder receiving the NRT stream to generate NRT signaling information and an NRT content; a content storage storing the generated NRT content therein; an NRT service manager transferring information for loading a service related content in the stored content to the content storage based on configuration information of an NRT service obtained through the NRT signaling information and calculating a period in which synchronization is performed in the service related content based on the service signaling and image synchronization information to generate synchronization period information; and an NRT file parser parsing a portion corresponding to a synchronization period in the service related content based on the synchronization period information to generate the additional image.

The service signaling and image synchronization information may include PSI/PSIP information, and the NRT signaling information may include an SMT and an NRT-IT.

At least any one of the service signaling and image synchronization information and the NRT-IT may include an SNRT program descriptor (SNRT_Program-descriptor), wherein the SNRT program descriptor includes: a service flag (StereoMono_serviceFlag) indicating whether a stream related service received in the reception apparatus is a monoscopic service or the program associated stereoscopic broadcasting service; service type information (NRT_Service_type) indicating a 3D broadcasting service type for signaling that the stream related service received in the reception apparatus is the program associated stereoscopic broadcasting service; and a time stamp information (FirstAUTimeStamp) indicating a time stamp of a start time of the program associated stereoscopic broadcasting service.

At least any one of the service signaling and image synchronization information and the NRT-IT may include an SNRT ES information descriptor (PA_SNRT_ES_Info_descriptor) including information on whether the reference image is a left image or a right image and link information on the additional image synchronized with the reference image, wherein the SNRT ES information descriptor includes: a field (view_flag) for signaling whether the reference image is the left image or the right image; and a file position information field (URI/FileName) for loading an NRT content file related to the additional image synchronized with the reference image.

At least any one of the SMT and the NRT-IT may include a capabilities descriptor (Capabilities_descriptor) downloading only the NRT content capable of being supported in the reception apparatus to allow the program associated stereoscopic broadcasting service to be performed, wherein the capabilities descriptor includes: a capability category including a service compatible code and a frame compatible code that are capable of signaling the 3D content configuration information; and a wrapper/archive format category that is a code for signaling a 3D file format.

The NRT-IT may include a stereoscopic related information descriptor (Stereoscopic_Related_info_descriptor) performing support so as to determine that the 3D NRT content transmitted to the reception apparatus is a content for the program associated stereoscopic broadcasting service, wherein the stereoscopic related information descriptor includes: a transport session identification (TSID) of the reference image that is to configure the program associated stereoscopic broadcasting service; a program number of the reference image that is to configure the program associated stereoscopic broadcasting service; a program identification (PID) of the reference image that is to configure the program associated stereoscopic broadcasting service; and an expected start time of the program associated stereoscopic broadcasting service.

The service signaling and image synchronization information may include information on a receiver wake-up time point for loading a related additional image file in advance in the receiver in order to synchronize the reference image and the additional image with each other.

The NRT image decoder may calculate a time difference between a current frame and a time point indicated by the time stamp information based on the time stamp information to provide synchronization between the stored content and the real time content.

In still another aspect, a reception method for a program associated stereoscopic broadcasting service is provided. The reception method includes: a demultiplexing step of receiving a program associated stereoscopic broadcasting stream to demultiplex the program associated stereoscopic broadcasting stream into a real time stream, an NRT stream, and a service signaling and image synchronization information stream; a service signaling and image synchronization information parsing step of generating an EIT and a PMT for synchronizing a reference image and an additional image with each other based on the service signaling and image synchronization information stream; a real time image decoding step of generating the reference image in real time based on the real time stream; an NRT image decoding step of generating the additional image in non-real time based on the NRT stream; and a rendering step reproducing a 3D image based on the reference image and the additional image, wherein the NRT image decoding step includes a step of generating the additional image in consideration of synchronization with the reference image based on the EIT and the PMT.

### [Advantageous Effects]

With the transmission apparatus and method and the reception apparatus and method for providing a program associated stereoscopic broadcasting service according to the exemplary embodiments of the present invention, in digital broadcasting, the additional image is transferred in advance and stored in the receiver, and the image transferred in real time in future and the stored content are synchronized with each other, thereby making it possible to provide a 3D service.

In addition, with the transmission apparatus and method and the reception apparatus and method for providing a program associated stereoscopic broadcasting service according to the exemplary embodiments of the present invention, the reference image is transferred using an existing 2DTV broadcasting system, and the additional image is transferred in non-real time based on an ATSC NRT transmission mechanism, thereby making it possible to provide compatibility with an existing 2D broadcasting system and overcome a limitation of a bandwidth for 3D transmission.

Further, with the transmission apparatus and method and the reception apparatus and method for providing a program associated stereoscopic broadcasting service according to the exemplary embodiments of the present invention, it is possible to provide a 3D service through an ATSC NRT service mechanism simultaneously with providing a high definition AV service in real time based on one RF signal.

### [Description of Drawings]

FIG. 1 is a conceptual diagram describing a concept of a program associated stereoscopic broadcasting service according to an exemplary embodiment of the present invention.
FIG. 2 is a block diagram schematically showing a transmission apparatus of a program associated stereoscopic broadcasting service according to an exemplary embodiment of the present invention.
FIG. 3 is a detailed block diagram specifically showing NRT signaling information of the transmission apparatus of the program associated stereoscopic broadcasting service according to the exemplary embodiment of the present invention.
FIGS. 4A and 4B are conceptual diagrams describing stereoscopic broadcasting service signaling information in a transmission apparatus of a program associated stereoscopic broadcasting service according to another exemplary embodiment of the present invention.
FIG. 5 is a flow chart schematically showing a transmission method of a program associated stereoscopic broadcasting service according to an exemplary embodiment of the present invention.
FIG. 6 is a block diagram schematically showing a reception apparatus of a program associated stereoscopic broadcasting service according to another exemplary embodiment of the present invention.
FIG. 7 is a conceptual diagram describing a synchronization method of a stereoscopic broadcasting service in the reception apparatus of the program associated stereoscopic broadcasting service according to another exemplary embodiment of the present invention.
FIGS. 8A and 8B are flow charts, respectively, describing a process of obtaining a non-real time content and a process of obtaining real time broadcasting information to process an associated service in the reception apparatus of the program associated stereoscopic broadcasting service according to another exemplary embodiment of the present invention.
FIG. 9 is a flow chart schematically showing a reception method of a program associated stereoscopic broadcasting service according to another exemplary embodiment of the present invention.

### [Mode for Invention]

Since the present invention may be variously modified and have several exemplary embodiments, specific exemplary embodiments will be shown in the accompanying drawings and be described in detail.

However, it is to be understood that the present invention is not limited to the specific exemplary embodiments, but includes all modifications, equivalents, and substitutions included in the spirit and the scope of the present invention.

Terms used in the specification, 'first', 'second', etc. can be used to describe various components, but the components are not to be construed as being limited to the terms. The terms are only used to differentiate one component from other components. For example, the 'first' component may be named the 'second' component and the 'second' component may also be similarly named the 'first' component, without departing from the scope of the present invention. A term 'and/or' includes a combination of a plurality of related described items or any one of the plurality of related described items.

It is to be understood that when one element is referred to as being "connected to" or "coupled to" another element, it may be connected directly to or coupled directly to another element or be connected to or coupled to another element, having the other element intervening therebetween. On the other hand, it is to be understood that when one element is referred to as being "connected directly to" or "coupled directly to" another element, it may be connected to or coupled to another element without the other element intervening therebetween.

Terms used in the present specification are used only in order to describe specific exemplary embodiments rather than limiting the present invention. Singular forms are intended to include plural forms unless the context clearly indicates otherwise. It will be further understood that the terms "comprises" or "have" used in this specification, specify the presence of stated features, steps, operations, components, parts, or a combination thereof, but do not preclude the presence or addition of one or more other features, numerals, steps, operations, components, parts, or a combination thereof.

Unless indicated otherwise, it is to be understood that all the terms used in the specification including technical and scientific terms has the same meaning as those that are understood by those who skilled in the art. It must be understood that the terms defined by the dictionary are identical with the meanings within the context of the related art, and they should not be ideally or excessively formally defined unless the context clearly dictates otherwise.

Hereinafter, exemplary embodiments of the present invention will be described in more detail with reference to the accompanying drawings. In order to facilitate the general understanding of the present invention in describing the present invention, through the accompanying drawings, the same reference numerals will be used to describe the same components and an overlapped description of the same components will be omitted.

### Transmission and reception system of program associated stereoscopic broadcasting service

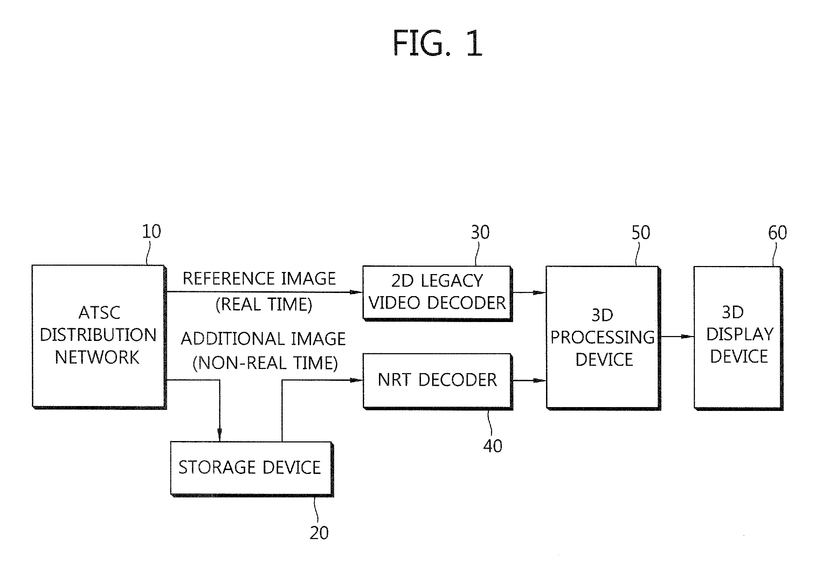

FIG. 1 is a conceptual diagram describing a concept of a program associated stereoscopic broadcasting service according to an exemplary embodiment of the present invention. As shown in FIG. 1, a transmission and reception system of a program associated stereoscopic broadcasting service according to an exemplary embodiment of the present invention may include an advanced television system committee (ATSC) distribution network 10, a storage device 20, a two-dimensional (2D) legacy video decoder 30, an non-real time (NRT) decoder 40, a three-dimensional (3D) processing device 50, and a 3D display device 60.

Referring to FIG. 1, in the program associated stereoscopic broadcasting service, a reference image is transmitted in real time using a 2D broadcasting system and an additional image is transmitted based on an ATSC NRT transmission mechanism to provide a 3DTV broadcasting service. The ATSC distribution network 10 divides and transmits the reference image and the additional image. Temporally, the additional image is first transmitted to thereby be stored in the storage device 20 of an NRT receiver. Thereafter, when the reference image of the broadcasting program is transmitted in real time, the reference image is synchronized with the additional image stored in the storage device 20, the 3D processing device 50 performs 3D processing on the synchronized image, and the processed image is displayed through 3D display device 60. Here, the 2D legacy video decoder 30 performs decoding on the reference image transmitted in real time, and the NRT decoder 40 performs decoding of the additional image transmitted in non-real time. Through the above-mentioned process, the program associated stereoscopic broadcasting service may be provided.

The transmission and reception system of the program associated stereoscopic broadcasting service is configured to include a transmission apparatus including a real time stream encoder encoding the reference image obtained through a transmission server into a real time stream, a non-real time stream encoder encoding the additional image into a non-real time stream, and the like; and a reception apparatus decoding a broadcasting content transmitted in non-real time to configure the program associated stereoscopic broadcasting service. A service for a 3D non-real time broadcasting content may be requested and the 3D non-real time broadcasting content may be transferred, using the Internet network as well as a broadcasting network.

### Transmission apparatus of program associated stereoscopic broadcasting service

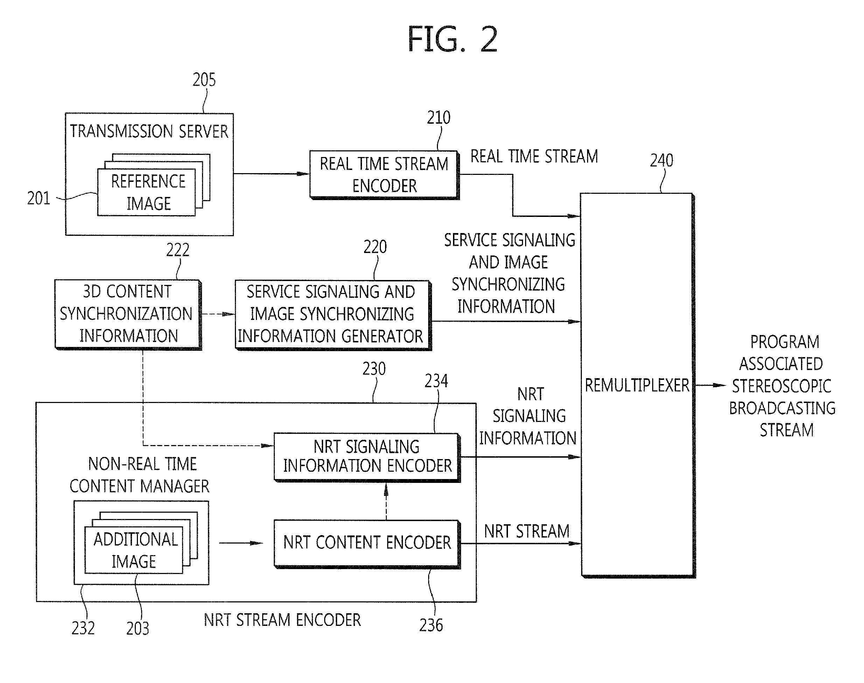

FIG. 2 is a block diagram schematically showing a transmission apparatus of a program associated stereoscopic broadcasting service according to an exemplary embodiment of the present invention. As shown in FIG. 2, the transmission apparatus of the program associated stereoscopic broadcasting service according to the exemplary embodiment of the present invention may include a real time stream encoder 210, a service signaling and image synchronization information generator 220, a non-real time stream encoder 230, and a re-multiplexer 240.

Referring to FIG. 2, the transmission apparatus of the program associated stereoscopic broadcasting service transmits a real time stream corresponding to a reference image 201 based on an existing 2D broadcasting system. At this time, a new descriptor is described in an event information table (EIT) and a program map table (PMT) in order to provide synchronization information with a previously received additional image 203 and service information. Then, the real time stream transferred to the re-multiplexer 240 through the encoder is multiplexed with the non-real time stream transferred from the non-real time encoder 230 to form and transmit the program associated stereoscopic broadcasting stream.

Describing each component in more detail, the reference, the reference image 201 obtained from the transmission server 205 is encoded in real time by the real time stream encoder 210. The encoded reference image 201 is converted into a real time stream and is then transmitted to the re-multiplexer 240. The real time stream is multiplexed with a non-real time stream in the re-multiplexer 240 to generate a program associated stereoscopic broadcasting stream.

The service signaling and image synchronizing information generator 220 generates service signaling and image synchronization information based on 3D content synchronization information 222. The service signaling and image synchronizing information includes PSI program specific information/PSIP program and service information protocol (PSI/PSIP). According to the exemplary embodiment of the present invention, the service signaling and image synchronizing information may include an event information table (EIT) and a program map table (PMT). The event map table EIT and the program map table (PMT) may include information for synchronizing a non-real content based on service configuration information for configuring a program associated 3D non-real time service and a time value informing a progress time of the corresponding service and information on the reference image 201.

The non-real time stream encoder 230 includes a non-real time content manager 232 storing and managing a 3D non-real broadcasting content, that is, an additional image 203, an NRT signaling information encoder 234 performing encoding for generating 3D based NRT signaling information, and an NRT content encoder 236 encoding a file including only the additional image 203 in non-real time. Therefore, the non-real time stream encoder 230 generates a non-real time content transmission schedule and encodes non-real time content files according to the non-real time content transmission schedule to generate a non-real time stream and transfer the non-real time stream to the re-multiplexer 240.

The NRT signaling information encoder 234 generates a service map table (SMT) and a non-real time information table (NRT-IT) in order to inform a receiver of service configuration information and content related information in consideration of correlation between the 3D content synchronization information 222 and the NRT content and transfers the SMT and the NRT-IT to the re-multiplexer 240. The NRT signaling information may include synchronization information for the program associated stereoscopic service and the service signaling information.

The NRT content encoder 236 receives a 3D non-real time image, that is, an additional image 203 and encodes the 3D non-real time image based on FLUTE. In addition, the NRT content encoder 236 generates a DSMCC addressable section based MPEG-2 TS stream and transfers the DSMCC addressable section based MPEG-2 TS stream to the re-multiplexer 240.

The re-multiplexer 240 multiplexes the real time stream generated in the real time stream encoder 210, the non-real time stream generated in the non-real time stream encoder 230, and the service signaling and image synchronization information to generate a program associated stereoscopic broadcasting stream and transmit the program associated stereoscopic broadcasting stream to the receiver. As described above, the generated program associated stereoscopic broadcasting stream may be transmitted through the Internet network as well as the broadcasting network.

In order to receive and reproduce the reference image transmitted in real time and the additional image transmitted in non-real time, signaling and synchronization information is important. The transmission apparatus of the program associated stereoscopic broadcasting according to the exemplary embodiment of the present invention may use the PSI/PSIP(including the event information table (EIT) and the program map table ((PMT)) and the NRT signaling information (including the service map table (SMT) and the non-real time information table (NRT-IT)) as the signaling and synchronization information. Hereinafter, for signaling related to access to and reproduction of a 3D content file in a receiver at the time of transmission of the program associated stereoscopic broadcasting service in the exemplary embodiment of the present invention, an extended definition of an existing descriptor and a new descriptor will be described.

First, in connection with at least one of the service signaling and image synchronization information and the non-real time information table (NRT-IT), an SNRT program descriptor (SNRT_Program_descriptor) is defined in order to describe information for synchronizing a non-real time content based on the service configuration information for configuring the program associated 3D NRT service and the time value capable of informing the progress time of the corresponding service.

**[Table 1]**

| **syntax** | | bit |
|---|---|---|
| SNRT_Program_descriptor () { | | |
| descriptor_tag | | bit ( ) |
| descriptor_length | | bit (8) |
| StereoMono serviceFlag | | bit (1) |
| If (StereoMono_serviceFlag) | | |
| { | | |
| NRT_Service_type | | |
| IF(NRT_Service_type=interworking) | | bit (3) |
| | { | |
| | FirstAUTimeStamp | bit (33) |
| | } | |
| } | | |
| } | | |

Table 1 is an example in which the SNRT program descriptor (SNRT_Program_descriptor) is defined. According to the exemplary embodiment of the present invention, the descriptor may be included in a descriptor loop after program_info_length of a program map table (PMT) at the time of transmission of a real time content for a program associated 3D NRT service. The SNRT program descriptor (SNRT_Program_descriptor) includes service flag (StereoMono_serviceFlag), service type information (NRT_Service_type), and time stamp information (FirstAUTimeStamp). Definitions for each information are as follows.
- StereoMono_serviceFlag: indicates discrimination between a monoscopic video service and a program associated stereoscopic video service. When this value is 0, a video service is considered as an existing monoscopic video service, and when this value is 1, the video service is considered as a program associated stereoscopic video service.
- NRT_Service_type: indicates a 3D broadcasting service type for signaling that the video service is the program associated stereoscopic video service.
- FirstAUTimeStamp: indicates a timestamp of a start time of the program associated stereoscopic video service. This is generally defined using a PTS or DTS value of the encoder.

In addition, at least one new descriptor of the service signaling and image synchronization information and the non-real time information table (NRT-IT) may be defined as follows. At the time of configuring the program associated 3D NRT service, a real time stream is always used as a reference image, and the a content transferred in non-real time is always used as an additional image. Therefore, separate signaling information indicating the reference image is not required, but information on whether the reference image transmitted in real time is a left image or a right image is required. In addition, link information on an NRT content, which is an additional image to be synchronized and used with the reference image, is required. To this end, according to the exemplary embodiment of the present invention, an SNRT ES information descriptor (PA_SNRT_ES_Info_descriptor) is defined as a descriptor related to at least one of the service signaling and image synchronization information and the non-real time information table (NRT-IT).

**[Table 2]**

| Syntax | bit |
|---|---|
| PA_SNRT_ES_Info_descriptor() { | |
| descriptor_tag | bit (8) |
| descriptor_length | bit (8) |
| view_flag | bit (1 |
| URI Fil Name | bit (32) |
| } | |

Table 2 shows an example of definition for the SNRT ES information descriptor (PA_SNRT_ES_Info_descriptor). According to the exemplary embodiment of the present invention, the above-mentioned descriptor may be included in a descriptor loop after ES_info_length in the program map table (PMT). The SNRT ES information descriptor (PA_SNRT_ES_Info_descriptor) includes a filed (view_flag) and a file position information filed (URI/FileName). Definitions for each information are as follows.
- view_flag: indicates a field signaling whether a reference image transmitted as a real time stream is a left image or a right image. When this value is 0, the reference image is considered as the right image, and when this value is 1, the reference image is considered as the left image.
- URI/FileName: indicates a field describing additional image information to be synchronized in a corresponding real time stream and file position information for loading a non-real time (NRT) file containing an additional image transferred in non-real time and downloaded.

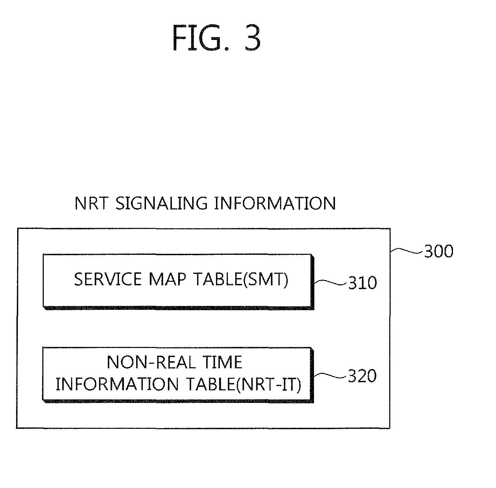

FIG. 3 is a detailed block diagram specifically showing NRT signaling information 300 of the transmission apparatus of the program associated stereoscopic broadcasting service according to the exemplary embodiment of the present invention. As shown in FIG. 3, the NRT signaling information 300 according to the exemplary embodiment of the present invention may include a service map table (SMT) 310 and a non-real time information table (NRT-IT) 320.

Referring to FIG. 3, in connection with the SMT and the NRT-IT, a capabilities descriptor (Capabilities_descriptor) performing support so as to download only a content capable of being supported in a receiver to allow a service to be performed in allowing the receiver to access a FLUTE session to obtain a content is first defined. In the STSC NRT, the capabilities descriptor (Capabilities_descriptor) is defined in order to clearly inform whether or not the receiver may support a content. The capabilities descriptor (Capabilities_descriptor) may include information on a protocol, a compression algorithm, a media type, or the like, that is to be supported in the receiver for an NRT service or a content item.

**[Table 3]**

| **syntax** | | **bit** |
|---|---|---|
| Capabilities_descriptor) { | | |
| | descriptor_tag | bit (8) |
| | descriptor_length | bit (8) |
| | capability code_count | bit (8) |
| | for (i=0; i<capability_code_count; i++) { | |
| | essential indicator | bit (1) |
| | capability_code | bit (7) |
| | if (capability_code>0x6F) { | |
| | form t_i entifier | bit (32) |
| | } | |
| | } | |
| | capability_string_count | bit (8) |
| | for (i=0; i<capability_string_count; i++) { | |
| | essential_indicator | bit (1) |
| | capability_category_code | bit (7) |
| | --- | |
| | } | |
| | } | |

Since the capabilities descriptor (Capabilities_descriptor) signals that a content transmitted for a program associated stereoscopic broadcasting service is a 3D content to prevent a 2D NRT terminal from downloading the 3D content, the capabilities descriptor (Capabilities_descriptor) includes a capability category for signaling a 3D service. In addition, the capabilities descriptor (Capabilities_descriptor) includes a service compatible code and a frame compatible code so as to signal 3D content configuration information as lower information of a corresponding category.

Further, the program associated stereoscopic broadcasting content is transferred using a 3D file format. The program associated stereoscopic broadcasting content is transferred using a stereoscopic video application format (SVAF) which is a format for storing and reproducing a stereoscopic video as an example of the 3D file format. Therefore, as a code for signaling the 3D file format (for example, the SVAF), a wrapper/archive format category may be further included.

Table 4 indicates an example of extending and defining a capability code of the ATSC NRT in order to signal the program associated 3D non-real time content.

**[Table 4]**

| **Wrapper/Archive Formats** | |
|---|---|
| 0x20 | MP4 multi media container format. |
| 0x21 | ZIP format as specified in this Standard. |
| *0x22* | *SVAF* |
| 0x23-0x2F | Reserved for future ATSC use. |

| **Compression Algorithms** | |
|---|---|
| 0x30 | DEFLATE algorithm, as specified in this Standard. |
| 0x31-0x3F | Reserved for future ATSC use. |

| **Media Types** | |
|---|---|
| 0x41 | AVC video per A/72 up to level 4.0 (level_ide<=40). |
| 0x42 | AVC video per A 72 up to level 4.2 (level_ide<=42). |
| 0x43 | AC-3 audio per A/53 Part 5 |
| 0x44 | E-AC-3 audio per A/52 |
| 0x4D-0x6F | reserved for future ATSC use. |

| **Stereoscopic Services** | |
|---|---|
| *0x70* | *Service Compatible* |
| *0x71* | *Frame Compatible* |
| 0x72-0x7F | available for private use. |
| ... | |

Further, in connection with the NRT-IT, a stereoscopic related information descriptor (Stereoscopic_Related_info_descriptor) is defined in order to describe a reference relationship, or the like, with a reference image to be transmitted in real time. According to the exemplary embodiment of the present invention, the descriptor is described after content_descriptor of the NRT-IT. In the case in which the above-mentioned descriptor is described, the receiver may determine that the transmitted non-real time content is a content for the program associated stereoscopic broadcasting service. In addition, information for suggesting a viewing guide may be obtained so as to consume the previously transferred additional image.

**[Table 5]**

| syntax | bit |
|---|---|
| Streoscopic_Related_Info_descriptor () { | |
| descriptor_tag | bit (8) |
| descriptor_length | bit (8) |
| Target_TSID | bit(16) |
| Target_program_number | bit(16) |
| Target_elementary_pid | bit(13) |
| Expected_start_time | bit(32) |
| } | |

Table 5 shows an example of definition for a stereoscopic related information descriptor (Stereoscopic_Related _info_descriptor). The stereoscopic related information descriptor (Stereoscopic_Related_info_descriptor) includes a TSID (Target_TSID) of a reference image, a program number (Target_program_number) of the reference image, a PID (Target_elementary_pid) of the reference image, and an expected start time (Expected_start_time) of a service. Definitions for each information are as follows.
- Target_TSID: indicates a TSID of a real time stream to configure an associated service in future.
- Target_program_number: indicates a program number of the real time stream to configure the associated service in future.
- Target_elementary_pid: indicates a PID of the reference image to configure the associated service in future.
- Expected_start_time: indicates an expected time to configure the associated service in future.

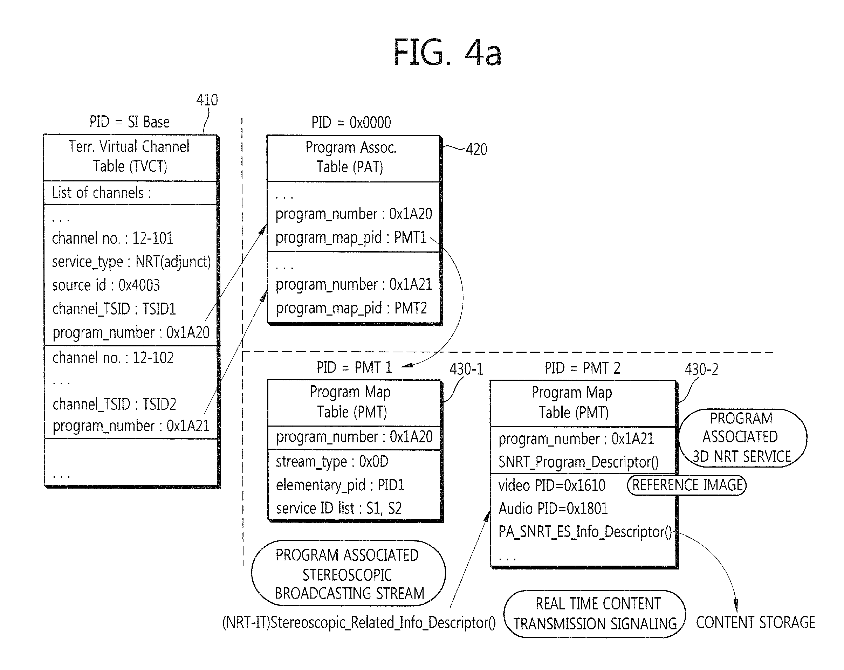

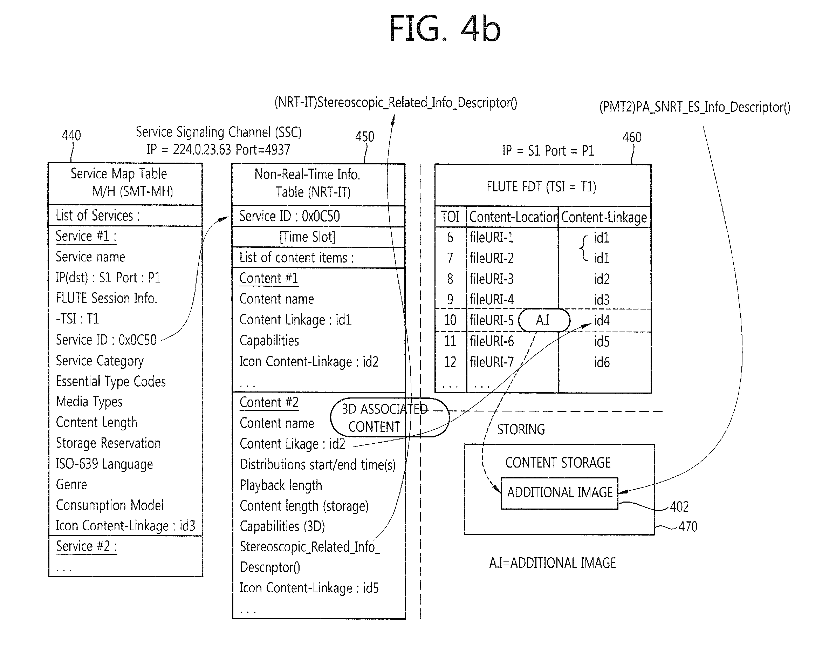

FIGS. 4A and 4B are conceptual diagrams describing stereoscopic broadcasting service signaling information in a transmission apparatus of a program associated stereoscopic broadcasting service according to another exemplary embodiment of the present invention. According to the present embodiment, a program map table (PMT) may be substantially an event information table (EIT). Further, as described above, an SNRT program descriptor (SNRT_Program_descriptor) and an SNRT ES information descriptor (PA_SNRT_ES_Info_descriptor) may be included in at least one of the PMT, the EIT, and the NRT-IT. In the present embodiment, it is considered that the SNRT_Program_descriptor and the PA_SNRT_ES_Info_descriptor belong to the PMT.

An existing receiver that does not support an NRT service obtains only a program map table 2 (PMT 2) 430-2 for transmission of a real time stream. In addition, since a 2D non-real time (NRT) receiver may not interpret an SNRT program descriptor (SNRT_Program_descriptor), an SNRT ES information descriptor (PA_SNRT_ES_Info_descriptor), and the like, defined in the present invention for configuring a 3D associated service in a content in the program map table 2 430-2, it ignores content of corresponding descriptors. Therefore, the 2D NRT receiver provides a 2D service using only a reference image transmitted in real time when a user selects a program associated 3D NRT service.

A receiver supporting a 2D NRT service searches for NRT information transmitted for an associated service in a Terr. virtual channel table (TVCT) 410 and obtains a program map table 1 (PMT 1) 430-1 for transmitting an NRT content and a program map table 2 430-2 for a real time stream based on the NRT information As described above, since the 2D NRT receiver may not interpret the SNRT program descriptor (SNRT_Program_descriptor), the SNRT ES information descriptor (PA_SNRT_ES_Info_descriptor), and the like, defined in the present invention for configuring the 3D associated service in a content in the program map table 2 430-2 for the real time stream, it ignores content of the corresponding descriptors. Further, the 2D NRT receiver does not receive a 3D content (Content#2) based on a extended and defined capabilities code even at the time of reception of the NRT content. Therefore, the receiver supporting the 2D NRT service also provide the 2D service using only reference image transmitted in real time when the user selects the program associated 3D NRT service.

A receiver capable of supporting a 3D NRT service searches for the NRT information transmitted for the associated service in the TVCT 410 and obtains the program map table 1 430-1 for transmitting the NRT content and the program map table 2 430-2 for the real time stream based on the NRT information. Here, in the program map table 2 430-2 for transmitting the real time stream, the SNRT program descriptor (SNRT_Program_descriptor) indicating an associated service is described, and information for referencing an additional image 402 is described in the SNRT ES information descriptor (PA_SNRT_ES_Info_descriptor), such that additional image 402 file information that is to be loaded in order to configure the program associated 3D NRT service in a file previously transmitted to a content storage 470 is obtained. In addition, even at the time of obtaining the additional image 402 previously transmitted in non-real time, a 3D content (TIO=10) is received based on a capability code value, and information on a real time stream for configuring the program associated 3D NRT service is obtained from a stereoscopic related information descriptor (Stereoscopic_Related_Info_descriptor) described in a non-real time information table (NRT-IT) 450.

Therefore, the 3D NRT receiver configures a real time stream as the reference image and the file previously received and stored in the receiver as the additional image 402 when the user selects the program associated 3D NRT service, thereby providing a stereoscopic service.

In order to synchronize the reference image transmitted as the real time stream and the previously stored additional image 402 with each other, the SNRT program descriptor (SNRT_Program_descriptor) included in the program map table 2 (430-2) and time stamp information (FirstAUTimeStamp) are used. Reproduction of the program associated stereoscopic broadcasting service may start at a time point in which the user selects a real time program channel through which the reference image is transmitted for the program associated stereoscopic broadcasting service and may be made from a time point corresponding to a progress situation of a real time program rather than a first portion of a stored content. Therefore, in order to allow the user to reproduce the previously transferred additional image 402 from an initial time point thereof, the receiver needs to inform the user of a time in which the program associated stereoscopic broadcasting service is possible and at the same time, guide a change into a channel capable of configuring the program associated stereoscopic broadcasting service in the corresponding time.

In addition, there may be the following considerations in developing a technology of synchronizing left and right images with each other.
- FirstAUTimeStamp insertion: indicates a time stamp value of actual start AU of a left or right image. To this end, an accurate start time point of the left and right images needs to be informed by encoder development or a transmission server.
- Receiver Wake-up point in time: a wake-up time point for loading a file needs to be informed in advance since a receiver should load a related additional image file in advance in order to perform synchronization with a real time transmission stream.

### Transmission method of program associated stereoscopic broadcasting service

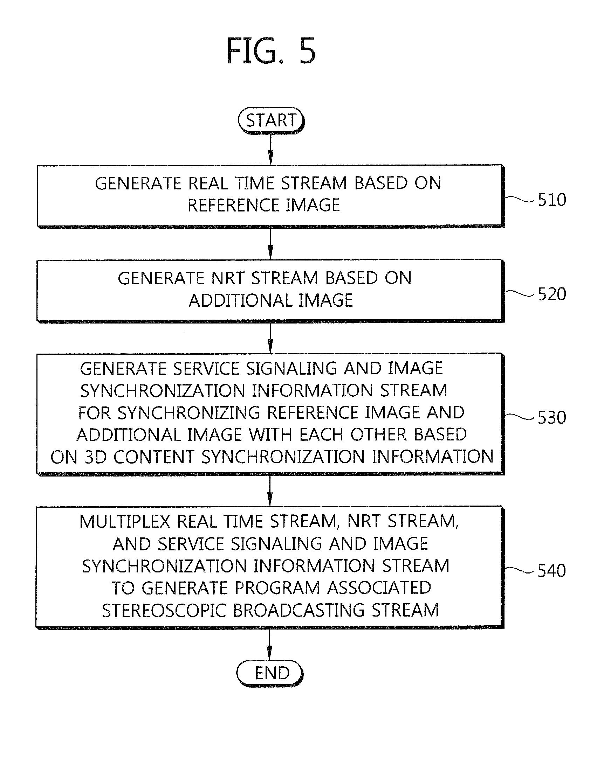

FIG. 5 is a flow chart schematically showing a transmission method of a program associated stereoscopic broadcasting service according to an exemplary embodiment of the present invention. As shown in FIG. 5, the transmission method of the program associated stereoscopic broadcasting service according to the exemplary embodiment of the present invention may include a real time stream encoding step (510) of encoding a reference image to generate a real time stream, a non-real time stream encoding step (520) of generating a non-real time (NRT) stream based on an additional image, an image synchronization information generating step (530) of generating a service signaling and image synchronization information (including an event information table (EIT) and a program map table (PMT)) stream for synchronizing the reference image and the additional image with each other based on 3D content synchronization information, and a re-multiplexing step (540) of multiplexing the real time stream, the non-real time stream, and the service signaling and image synchronizing information stream to generate a program associated stereoscopic broadcasting stream.

### Reception apparatus of program associated stereoscopic broadcasting service

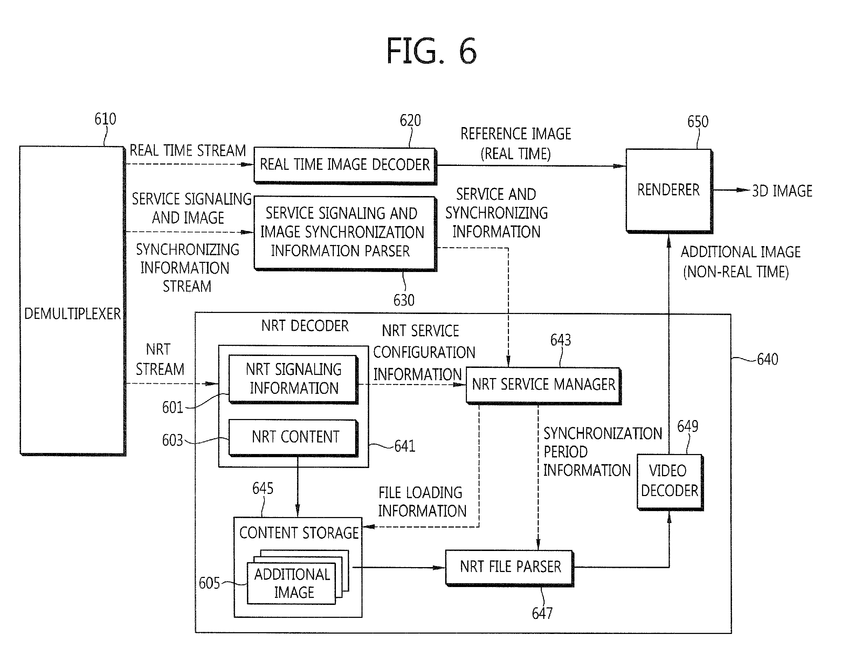

FIG. 6 is a block diagram schematically showing a reception apparatus of a program associated stereoscopic broadcasting service according to another exemplary embodiment of the present invention. As shown in FIG. 6, the reception apparatus of the program associated stereoscopic broadcasting service according to another exemplary embodiment of the present invention may include a demultiplexer 610, a real time image decoder 620, a service signaling and image synchronization information parser 630, a non-real time image decode 640, and a renderer 650.

Referring to FIG. 6, the reception apparatus of the program associated stereoscopic broadcasting service is configured by adding an NRT decoder 641, an NRT service manager 643, and an NRT file parser 647 to a structure of a reception apparatus used for existing broadcasting. That is, the reception apparatus of the program associated stereoscopic broadcasting service receives an NRT based 3DTV broadcasting signal (for example, a program associated stereoscopic broadcasting stream) and demodulates and channel-decodes the NRT based 3DTV broadcasting signal to obtain and store NRT 3DTV content and information selected by a user.

Describing the reception device in more detail, the demultiplexer 610 receives the program associated stereoscopic broadcasting stream through a broadcasting network or the Internet network and demultiplexes the broadcasting stream. The broadcasting stream is demultiplexed into a real time stream related to an reference image, a non-real time stream related to an additional image, a service signaling and image synchronization information stream related to service signaling and image synchronization information between the real time stream and the non-real time stream by the demultiplexer 610.

The real time image decoder 620 receives the real time stream demultiplexed in the demultiplexer 610 as an input and performs decoding to generate a reference image in real time. The generated reference image is transmitted to the renderer 650 and then synthesized with an additional image to generate a 3D image.

The service signaling and image synchronization information parser 630 determines whether or not information on a real time content (a content (including the reference image) decoded based on the real time stream) and information on a non-real time content 603 are transmitted. In the case in which the non-real time content 603 is being transmitted, information on a corresponding TS may be obtained. The service signaling and image synchronization information may include PSI/PSIP. In addition, service signaling and image synchronization information described in an event information table (EIT) and a program map table (PMT) included in the service signaling and image synchronization information may be transferred to an NRT service manager 643. Here, at least one of the EIT, the PMT, and the NRT-IT may use an extended definition of an existing descriptor and a new descriptor in connection with access to and reproduction of various content (files), as described above (See Tables 1 and 2).

The not-real time image decoder 640 receives the not-real time stream demultiplexed in the demultiplexer 610 as an input and performs decoding to generate an additional image in non-real time. Then, the generated additional image is processed with the reference image decoded in the real time image decoder 620, thereby making it possible to generate a 3D image. The non-real time image decode 640 may include the NRT decoder 641, the NRT service manager 643, a content storage 645, the NRT file parser 647, and a video decoder 649.

The NRT decoder 641 obtains NRT signaling information 601 and the non-real time content (603) based on the non-real time stream demultiplexed in the demultiplexer 610. Here, the no-real time stream may be an FLUTE packet transferred as a DSMCC-addressable section. The NRT decoder decodes the FLUTE packet to generate the NRT signaling information 601 and the non-real time content 603. The NRT signaling information includes a service map table (SMT) and a non-real time information table (NRT-IT), and NRT service configuration information obtained through the NRT signaling information is transmitted to the NRT service manager 643. Further, in the case in which the non-real time content 603 obtained through the NRT decoder 641 is a content reserved by a user, the content may be stored in the content storage 645 of the reception device.

The NRT service manager 643 transmits information for loading a file for configuring a program associated stereoscopic broadcasting service in the content stored in the content storage 645 to the content storage 645 based on the NRT service configuring information obtained through the NRT signaling information. In addition, the NRT service manager 643 calculates a period in which synchronization is performed in the file based on the service and synchronization information obtained in the service signaling and image synchronization information parser 630 and the NRT signaling information to transmit synchronization section information to the NRT file parser 647. Here, the NRT signaling information includes an SMT and an NRT-IT as described above, wherein the SMT and the NRT-IT may use an extended definition of an existing descriptor and a new descriptor for signaling related to access to and reproduction of a 3D content (file) in the reception apparatus (See Tables 3 to 5).

The content storage 645 may store the non-real time content 603 decoded in the NRT decoder 641. The non-real time content 603 may be synchronized and decoded through the NRT file parser 647 and the video decoder 649. The content storage 645 may be a storage device such as a flash memory.

The NRT file parser 647 extracts and parses only a portion corresponding to a synchronization period transferred from the NRT service manager 643 from the content storage 645 to transmit the extracted and parsed portion to the decoder 649.

The video decoder 649 decodes the content of the portion parsed in the NRT file parser 647 to generate an additional image, and the generated additional image is transmitted to the renderer 650.

The renderer 650 renders both of the reference image generated in real time in the real time image decoder 620 and the additional image generated in non-real time in the non-real time image decoder 640 to generate a 3D image, thereby providing a stereoscopic service.

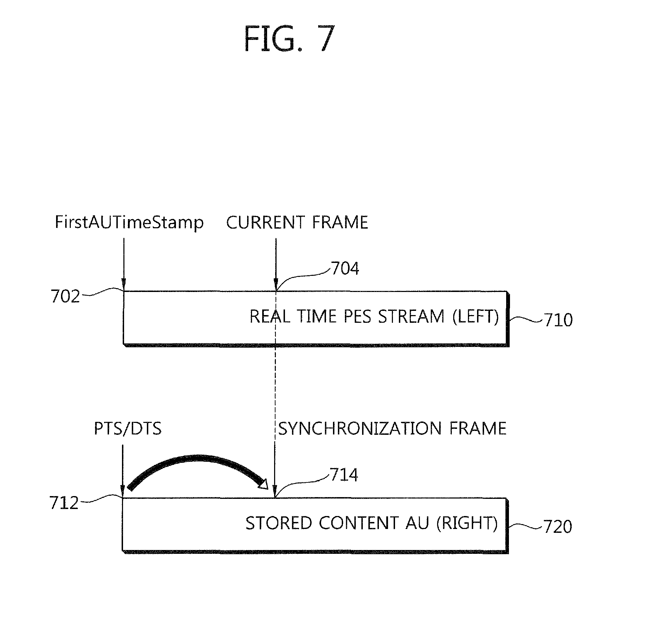

FIG. 7 is a conceptual diagram describing a synchronization method of a program associated stereoscopic broadcasting service in the reception apparatus of the program associated stereoscopic broadcasting service according to another exemplary embodiment of the present invention. As shown in FIG. 7, time stamp information (FirstAUTimeStamp) 702 may be used in order to synchronize a real time PES stream (means a real time stream) 710 and a stored content AU (means a non-real time stream AU) 720 with each other.

Referring to FIG. 7, the real time PES stream 710 and the stored content AU 720 may be synchronized with each other using the time stamp information (FirstAUTimeStamp) 702 defined in an SNRT program descriptor (SNRT_program_descriptor). The time stamp information (FirstAUTimeStamp) 702 is generated by storing a time stamp (for example, a PTS or a DTS 714) value of a start AU of a 3DTV broadcasting service in an encoder or a transmission server. The reception device parses the time stamp information to compare the time stamp 702 of the real time PES stream 710 with a current frame, thereby calculating a difference therebetween, as shown in FIG. 7. Then, a corresponding synchronization frame of a stored file is searched for using the difference from a corresponding frame. Next, images between the stored content AU 720 and the real time PES stream 710 are synchronized with each other and provided using the synchronization frame information.

A start time of the 3DTV broadcasting service may be synchronized through the above-mentioned scheme. This method has an advantage in that since the time stamp information (FirstAUTimeStamp) 702 shows a time stamp for an actual start AU of a 3DTV broadcasting service of the real time PES 710, even after the 3DTV service starts, the synchronization frame of the stored content AU 720 may be simply searched for through comparison with the time stamp 702 included in the real time PES stream 710.

In addition, as described above, there may be the following considerations in developing a technology of synchronizing left and right images with each other. First, time stamp information (FirstAUTimeStamp) 702 may be inserted. The time stamp information indicates a time stamp value of an actual start AU of a left or right image. To this end, an accurate start time point of the left and right images needs to be informed by encoder development or a transmission server. In addition, receiver wake-up time point information may be provided. A wake-up time point for loading a file needs to be informed in advance since a receiver should load a related additional image file in advance in order to perform synchronization with a real time transmission stream.

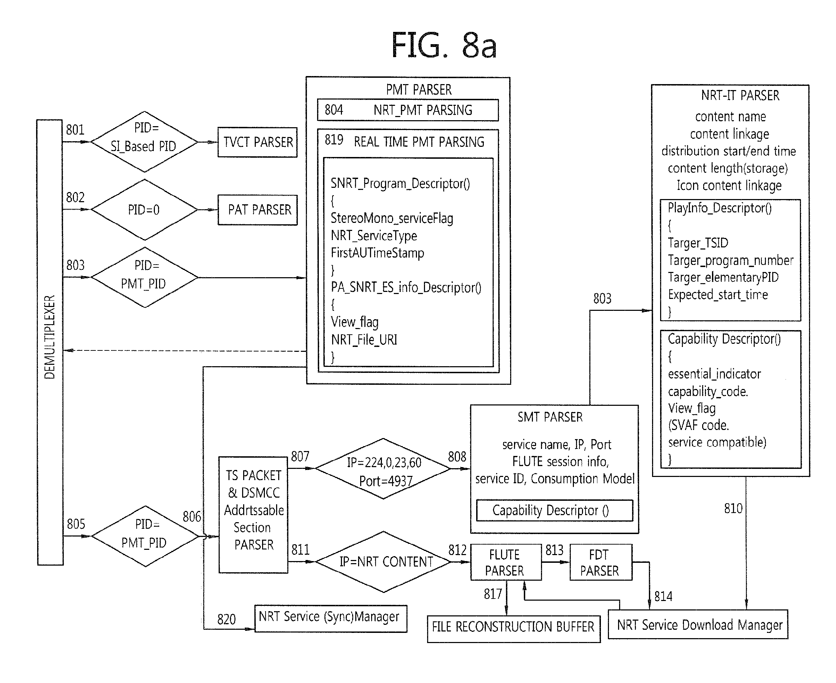

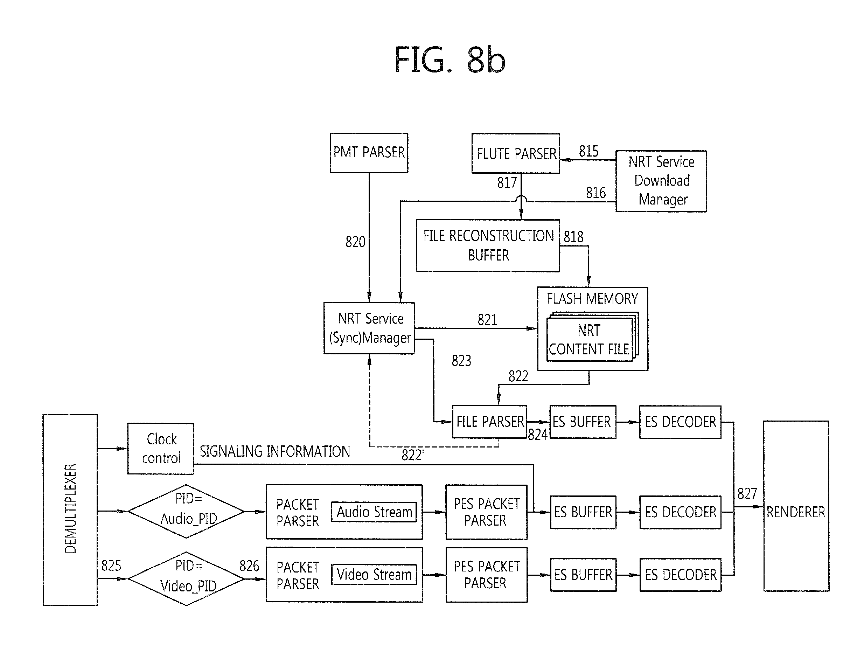

FIGS. 8A and 8B are flow charts, respectively, describing a process of obtaining a non-real time content and a process of obtaining real time broadcasting information to process an associated service in the reception apparatus of the program associated stereoscopic broadcasting service according to another exemplary embodiment of the present invention. As described above, according to the present embodiment, a program map table (PMT) may be substantially an event information table (EIT). Further, an SNRT program descriptor (SNRT_Program_descriptor) and an SNRT ES information descriptor (PA_SNRT_ES_Info_descriptor) may be included in at least one of the PMT, the EIT, and the NRT-IT. In the present embodiment, it is considered that the SNRT_Program_descriptor and the PA_SNRT_ES_Info_descriptor belong to the PMT.

Referring to FIGS. 8A and 8B, the broadcasting reception apparatus according to another exemplary embodiment of the present invention provides a program associated broadcasting stereoscopic service according to a step of obtaining a non-real time content and a step of allowing a previously transferred non-real time content to associate with a real time content to configure the program associated broadcasting stereoscopic service.

### (1) Step of obtaining non-real time content

### ① Process of obtaining non-real time content based on MPEG-2 TS

In order to search for a TVCT from a received MPEG-2 TS and search for an NRT service that is to configure an associated service, a service type (service_type), a channel TSID (channel_TSID) of a channel confirmed as an NRT service, and a program number (program_number) are parsed to obtain program association table (PAT) information (801). The program number (program_number) and a program PID (program_map_pid) parsed from the obtained PAT are confirmed to obtain program map table (PMT) information (802). A PMT for an NRT service and a PMT corresponding to real time broadcasting are input to a PMT parser, which performs different processing according to a kind of input PMT (803). In the case of the PMT for an NRT service, a PID transmitting the NRT service and a service ID list are confirmed (804). A packet for the NRT service transmitted in non-real time is received from TS (805). A packet corresponding to the NRT service is depacketized, and a datagram configured of a DSMCC addressable section is parsed (806). Then, a process of processing a transferred content based on an NRT mechanism in the reception apparatus is mainly divided into a process of obtaining NRT service information and receiving file data actually configuring the NRT service.

### ② Process of obtaining service information on NRT content

In order to obtain NRT service information, the reception apparatus first parses a header of a datagram and recognizes that a corresponding channel is a service signaling channel (SSC) when IP corresponds to 224.0.23.60:4937 (807). A packet transmitted to the SSC is parsed to search for a SMT, and the SMT is parsed to obtain service related information, service related NRT-IT, and FLUTE session information (808).

Based on the NRT-IT related information obtained through the SMT parsing, the NRT-IT table required for configuring the service is received and then parsed to obtain information of each content item, content linkage information, information for download, descriptor information, and the like. First, a capability descriptor is parsed to confirm a capability list (a 3D content, a download protocol, a wrapper/archive format, a media type, or the like), thereby determining whether or not a service may be provided in the reception apparatus. Next, information for content download such as a start time, a length (duration information) of a time slot for each content item, a repetition cycle, a repetition number of the time slot in the case of being repeatedly transmitted, or the like, is obtained from a Time_slot descriptor. In addition, a Play_info descriptor is parsed to obtain information that is to configure an associated service in future (809). Elementary information for content download and reproduction related information for a service obtained through the above-mentioned process is transferred to an NRT service download manager (810).

### ③ Process of obtaining file transmitted in NRT

Next, in order to obtain a file actually configuring the NRT service, the receiver transfers a packet rather than the SSC channel to the FLUTE parser (811). The FLUTE parser parses the transferred packet and then transfers the parsed packet to an FDT parser when TOI=0 (812). The FDT parser parses the FDT configured of XML to obtain corresponding FLUTE session information and information on files transmitted through the session (813). TOI and Content_linkage information obtained through the FDT parsing are transferred to the NRT service download manager (814). Here, the NRT service download manager and an NRT service (sync) manager to be described below are component included in the NRT service manager 643 of FIG. 6 described above. The NRT service download manager transfers information on files that is to be received through the FLUTE session to the FLUTE parser (815). In addition, the NRT service download manager transfers reproduction related information obtained in the NRT-IT with respect to a downloaded 3D content to the NRT service (sync) manager (816). The FLUTE parser receives only a data block for a file that is to be downloaded and stores the received data block in a file reconstruction buffer (817). The file reconstruction buffer generates information on reconstruction of the file transferred from the transmit side, a path in which the file is stored, and the use of the file and stores a corresponding file in a file storage such as a flash memory (818).

### (2) Process of obtaining real time broadcasting information to process associated service

When a user selects a channel in which an associated service is possible, a PMT for configuring real time broadcasting is transferred to a PMT parser, and program related information and elementary stream related information in the PMT are parsed (819). In this step (819), in order to provide a 3D service using a real time stream and a file previously transmitted in non-real time, an SNRT program descriptor (SNRT_Program_descriptor) is first parsed to detect whether a 2D/3D service is present, a service associated with the file transmitted in non-real time, or the like, and obtain information on a progress time of a real time program. Further, in order to configure the 3D service, information on left/right images for a video stream that is currently transmitted in real time, information of a non-real time file that is synchronized with the corresponding image, and the like, are obtained. The above-mentioned information is transmitted to the NRT service (sync) manager after the PMT is parsed (820).

The NRT service (sync) manager determines whether or not an associated 3D service may be configured based on the transferred information and calculates non-real time file loading and synchronization information when the associated 3D service may be used. The NRT service (sync) manager transfers information (a storing path and a file name) for loading a real time video stream and a non-real time file for configuring an associated service to the file storage (that may be a flash memory) (821). The file parser parses the non-real time file (822). At this time, in the case in which information for synchronization may be obtained the file, the file parser transfers the corresponding information to the NRT service (sync) manager (822'). The NRT service (sync) manager calculates an AU at which synchronization is to start based on the parsed synchronization information (time stamp information (FirstAUTimeStamp), or the like) to transfer the corresponding information to the file parser (823). The file parser decodes a file from a corresponding portion thereof based on AU information to be synchronized transferred from the NRT service (sync) manager to transfer the decoded file to an ES buffer (824).

A packet corresponding to an audio stream and a video stream is received and depacketized from a real time TS using audio and video related PID information detected by parsing the PMT for configuring real time broadcasting (825). Each of an audio ES and a video ES is transferred to an audio ES buffer, a video ES buffer, and a decoder through a TS packet parser and a PES packet parser (826). ESs decoded from the real time TS and an ES decoded from the non-real file are transferred to the renderer to provide an NRT program associated based stereoscopic service to the user (827).

### Reception method of progam associated stereoscopic broadcasting service

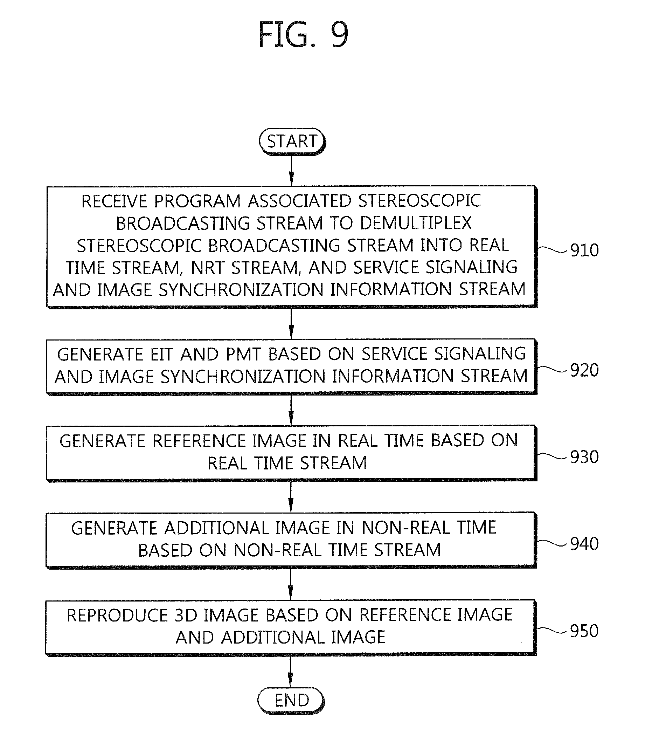

FIG. 9 is a flow chart schematically showing a reception method of a program associated stereoscopic broadcasting service according to another exemplary embodiment of the present invention. As shown in FIG. 9, the reception method of the program associated stereoscopic broadcasting service according to another exemplary embodiment of the present invention may include a demultiplexing step (910) of receiving a stereoscopic broadcasting stream to demultiplex the stereoscopic broadcasting stream into a real time stream, a non-real time stream, and a service signaling and image synchronization information stream, a service signaling and image synchronization information parsing step (920) of generating an EIT and a PMT for synchronizing a reference image and an additional image with each other based on the service signaling and image synchronization information stream, a real time image decoding step (930) of generating the reference image in real time based on the real time stream, a non-real time image decoding step (940) of generating the additional image in non-real time based on the non-real time stream, and a rendering step (950) reproducing a 3D image based on the reference image and the additional image, wherein the non-real time image decoding step (940) includes a step of generating the additional image in consideration of synchronization with the reference image based on the EIT and the PMT.

Hereinabove, although the present invention have been described with reference to the accompanying drawing and the exemplary embodiments thereof, those skilled in the art will appreciate that the scope of the present invention is not limited to the accompanying drawing and the exemplary embodiments of the present invention, but various modifications, additions and substitutions are possible without departing from the scope and spirit of the invention as disclosed in the accompanying claims.

## Claims

1. A transmission apparatus for a program associated stereoscopic broadcasting service, comprising:
a real time stream encoder generating a real time stream by encoding a reference image;
a non-real time (NRT) stream encoder generating an NRT stream based on an additional image;
an image synchronization information generator generating a service signaling and image synchronization information (including an event information table (EIT) and a program map table (PMT)) stream for synchronizing the reference image and the additional image with each other based on 3D content synchronization information; and
a re-multiplexer generating a program associated stereoscopic broadcasting stream by multiplexing the real time stream, the non-real time stream, and the service signaling and image synchronizing information stream.

2. The transmission apparatus of claim 1, wherein the non-real time stream encoder stores and manages an NRT content based on the additional image and generates a schedule for transmission of the NRT content to transmit the NRT content to the re-multiplexer in non-real time according to the schedule.

3. The transmission apparatus of claim 2, wherein the non-real time stream encoder includes:
a non-real time content manager storing and managing the NRT content based on the additional image;
an NRT content encoder generating the NRT stream by receiving an NRT image of the NRT content and performing encoding on the NRT image; and
an NRT signaling information encoder generating NRT signaling information in order to transmit information related to the NRT content and configuration information of the program associated stereoscopic broadcasting service to a receiver.

4. The transmission apparatus of claim 3, wherein the service signaling and image synchronization information includes program specific information (PSI)/program and service information protocol (PSIP) information, and
the NRT signaling information includes a service map table (SMT) and a non-real time information table (NRT-IT).

5. The transmission apparatus of claim 4, wherein at least any one of the service signaling and image synchronization information and the NRT signaling information includes an SNRT program descriptor (SNRT_Program_descriptor), the SNRT program descriptor including:
a service flag (StereoMono_serviceFlag) indicating whether a service provided in the transmission apparatus is a monoscopic service or the program associated stereoscopic broadcasting service;
service type information (NRT_Service_type) indicating a 3D broadcasting service type for signaling that the service provided in the transmission apparatus is the program associated stereoscopic broadcasting service; and
a time stamp information (FirstAUTimeStamp) indicating a time stamp of a start time of the program associated stereoscopic broadcasting service.

6. The transmission apparatus of claim 4, wherein at least any one of the service signaling and image synchronization information and the NRT signaling information includes an SNRT ES information descriptor (PA_SNRT_ES_Info_descriptor) including information on whether the reference image is a left image or a right image and link information on the additional image synchronized with the reference image, the SNRT ES information descriptor including:
a field (view_flag) for signaling whether the reference image is the left image or the right image; and
a file position information field (URI/FileName) for loading an NRT content file related to the additional image synchronized with the reference image.

7. The transmission apparatus of claim 4, wherein at least any one of the SMT and the NRT-IT includes a capabilities descriptor (Capabilities_descriptor) downloading only the NRT content capable of being supported in the receiver to allow the program associated stereoscopic broadcasting service to be performed, the capabilities descriptor including:
a capability category including a service compatible code and a frame compatible code that are capable of signaling the 3D content configuration information; and
a wrapper/archive format category that is a code for signaling a 3D file format.

8. The transmission apparatus of claim 4, wherein the NRT-IT includes a stereoscopic related information descriptor (Stereoscopic_Related_info_descriptor) performing support so as to determine that the NRT content transmitted to the receiver is a content for the program associated stereoscopic broadcasting service, the stereoscopic related information descriptor including:
a transport session identification (TSID) of the reference image that is to configure the program associated stereoscopic broadcasting service;
a program number of the reference image that is to configure the program associated stereoscopic broadcasting service;
a program identification (PID) of the reference image that is to configure the program associated stereoscopic broadcasting service; and
an expected start time of the program associated stereoscopic broadcasting service.

9. The transmission apparatus of claim 3, wherein the PMT includes information on a receiver wake-up time point for loading a related additional image file in advance in the receiver in order to synchronize the reference image and the additional image with each other.

10. A transmission method for a program associated stereoscopic broadcasting service, comprising:
a real time stream encoding step of generating a real time stream by encoding a reference image;
an NRT streaming encoding step of generating an NRT stream based on an additional image;
an image synchronization information generating step of generating a service signaling and image synchronization information (including an EIT and a PMT) stream for synchronizing the reference image and the additional image with each other based on 3D content synchronization information; and
a re-multiplexing step of generating a program associated stereoscopic broadcasting stream by multiplexing the real time stream, the non-real time stream, and the service signaling and image synchronizing information stream.

11. A reception apparatus for a program associated stereoscopic broadcasting service, comprising:
a demultiplexer receiving a program associated stereoscopic broadcasting stream to demultiplex the program associated stereoscopic broadcasting stream into a real time stream, an NRT stream, and a service signaling and image synchronization information stream;
a real time image decoder generating a reference image in real time based on the real time stream;
an NRT image decoder generating an additional image in non-real time based on the NRT stream;
a service signaling and image synchronization information parser generating an EIT and a PMT for synchronizing the reference image and the additional image with each other based on the service signaling and image synchronization information stream; and
a renderer reproducing a 3D image based on the reference image and the additional image,
wherein the non-real time image decoder generates the additional image in consideration of synchronization with the reference image based on the EIT and the PMT.

12. The reception apparatus of claim 11, wherein the NRT image decoder includes:
an NRT decoder receiving the NRT stream to generate NRT signaling information and an NRT content;
a content storage storing the generated NRT content therein;
an NRT service manager transferring information for loading a service related content in the stored content to the content storage based on configuration information of an NRT service obtained through the NRT signaling information and calculating a period in which synchronization is performed in the service related content based on the service signaling and image synchronization information to generate synchronization period information; and
an NRT file parser parsing a portion corresponding to a synchronization period in the service related content based on the synchronization period information to generate the additional image.

13. The reception apparatus of claim 12, wherein the service signaling and image synchronization information includes PSI/PSIP information, and
the NRT signaling information includes an SMT and an NRT-IT.

14. The reception apparatus of claim 13, wherein at least any one of the service signaling and image synchronization information and the NRT-IT includes an SNRT program descriptor (SNRT_Program_descriptor), the SNRT program descriptor including:
a service flag (StereoMono_serviceFlag) indicating whether a stream related service received in the reception apparatus is a monoscopic service or the program associated stereoscopic broadcasting service;
service type information (NRT_Service_type) indicating a 3D broadcasting service type for signaling that the stream related service received in the reception apparatus is the program associated stereoscopic broadcasting service; and
a time stamp information (FirstAUTimeStamp) indicating a time stamp of a start time of the program associated stereoscopic broadcasting service.

15. The reception apparatus of claim 13, wherein at least any one of the service signaling and image synchronization information and the NRT-IT includes an SNRT ES information descriptor (PA_SNRT_ES_Info_descriptor) including information on whether the reference image is a left image or a right image and link information on the additional image synchronized with the reference image, the SNRT ES information descriptor including:
a field (view_flag) for signaling whether the reference image is the left image or the right image; and
a file position information field (URI/FileName) for loading an NRT content file related to the additional image synchronized with the reference image.

16. The reception apparatus of claim 13, wherein at least any one of the SMT and the NRT-IT includes a capabilities descriptor (Capabilities_descriptor) downloading only the NRT content capable of being supported in the reception apparatus to allow the program associated stereoscopic broadcasting service to be performed, the capabilities descriptor including:
a capability category including a service compatible code and a frame compatible code that are capable of signaling the 3D content configuration information; and
a wrapper/archive format category that is a code for signaling a 3D file format.

17. The reception apparatus of claim 13, wherein the NRT-IT includes a stereoscopic related information descriptor (Stereoscopic_Related_info_descriptor) performing support so as to determine that the 3D NRT content transmitted to the reception apparatus is a content for the program associated stereoscopic broadcasting service, the stereoscopic related information descriptor including:
a transport session identification (TSID) of the reference image that is to configure the program associated stereoscopic broadcasting service;
a program number of the reference image that is to configure the program associated stereoscopic broadcasting service;
a program identification (PID) of the reference image that is to configure the program associated stereoscopic broadcasting service; and
an expected start time of the program associated stereoscopic broadcasting service.

18. The reception apparatus of claim 13, wherein the service signaling and image synchronization information includes information on a receiver wake-up time point for loading a related additional image file in advance in the receiver in order to synchronize the reference image and the additional image with each other.

19. The reception apparatus of claim 15, wherein the NRT image decoder calculates a time difference between a current frame and a time point indicated by the time stamp information based on the time stamp information to provide synchronization between the stored content and the real time content.

20. A reception method for a program associated stereoscopic broadcasting service, comprising:
a demultiplexing step of receiving a program associated stereoscopic broadcasting stream to demultiplex the program associated stereoscopic broadcasting stream into a real time stream, an NRT stream, and a service signaling and image synchronization information stream;
a service signaling and image synchronization information parsing step of generating an EIT and a PMT for synchronizing a reference image and an additional image with each other based on the service signaling and image synchronization information stream;
a real time image decoding step of generating the reference image in real time based on the real time stream;
an NRT image decoding step of generating the additional image in non-real time based on the NRT stream; and
a rendering step reproducing a 3D image based on the reference image and the additional image,
wherein the NRT image decoding step includes a step of generating the additional image in consideration of synchronization with the reference image based on the EIT and the PMT.
